# EUROPÄISCHE PATENTSCHRIFT

(11) **EP 0 386 677 B1**
(45) Veröffentlichungstag und Bekanntmachung des Hinweises auf die Patenterteilung: **05.01.1994**
(21) Anmeldenummer: 90104207.7
(22) Anmeldetag: 05.03.1990
(51) Int. Cl.: G07F 7/10, H04L 9/32, H04L 9/12

(54) **Verfahren zur Generierung einer Zufallszahl für die verschlüsselte Übertragung von Daten, unter Verwendung eines variablen Startwertes**
Method for the generation of a random number for encyphered data transmission, using a variable start-value
Méthode de génération d'un nombre aléatoire pour la communication chiffrée de données, en utilisant un nombre de départ variable

(30) Priorität: 08.03.1989 DE 3907526
(43) Veröffentlichungstag der Anmeldung: 12.09.1990
(73) Patentinhaber: Siemens Nixdorf Informationssysteme Aktiengesellschaft, 33102 Paderborn (DE)
(72) Erfinder: Martin, Günter, D-8011 Neubaldham (DE)
(74) Vertreter: Fuchs, Franz-Josef, Dr.-Ing.

(56) Entgegenhaltungen:
- EP-A- 0 063 332
- EP-A- 0 063 794
- EP-A- 0 064 779
- EP-A- 0 140 013
- EP-A- 0 281 057
- EP-A- 0 320 489
- WO-A-85/03787
- WO-A-87/07743
- FR-A- 2 600 190
- US-A- 4 605 820

## Beschreibung

Die Erfindung betrifft ein Verfahren zur Generierung einer Zufallszahl für die verschlüsselte Übertragung von Daten gemäß den Merkmalen des Oberbegriffs des Anspruchs 1.

In modernen Datenverarbeitungs- und Kommunikationssystemen spielt der Schutz der Daten eine immer wichtigere Rolle. Die Qualität eines Systems in bezug auf einen ausreichenden Datenschutz hängt dabei entscheidend davon ab, inwieweit es gelingt, daß der Zugriff zum System nur für berechtigte Personen möglich ist und umgekehrt nichtberechtigte Personen mit absoluter Sicherheit ausgesperrt bleiben. Eine einfache, wenn auch nicht absolut sichere Möglichkeit zur Überprüfung der Zugangsberechtigung zu einem System sind zum Beispiel sogenannte Paßwörter, die nur dem berechtigten Benutzer bekannt sind und die vom Benutzer beliebig oft geändert werden können. Da bei Paßwörtern die Gefahr besteht, daß sie von Unbefugten ausgespäht oder abgehört werden können, sind zusätzliche Sicherungsmaßnahmen unverzichtbar. Eine dieser Maßnahmen ist zum Beispiel die Ver- und Entschlüsselung der übertragenen Information, eine Maßnahme, die bei Datenverarbeitungssystemen unter anderem auch mit Hilfe der Chipkarte realisierbar ist (vgl. EP-A-0 063 794, EP-A-0 064 779, EP-A-0 140 013).

Mit der zunehmenden Einbeziehung der Chipkarte in Kommunikationssysteme entsteht andererseits wieder ein zusätzliches Sicherheitsrisiko, weil Chipkarten relativ leicht verlorengehen können. Es muß deshalb unbedingt dafür gesorgt werden, daß die Chipkarte bei Verlust in jedem Fall vor einem eventuellen Mißbrauch geschützt ist. Die Chipkarte ist deshalb so konzipiert, daß auf die in einer gesicherten Chipkarte gespeicherten Daten nur dann zugegriffen werden kann, wenn vom Benutzer vorab ein nur in der Chipkarte abgespeicherter Identifikator, beispielsweise eine persönliche Identifikationsnummer, die sogenannte PIN, eingegeben wird.

Eine weitere Sicherheitsbarriere kann mit Hilfe der Authentifikation der Chipkarte zum System aufgebaut werden. Diese Authentifikation verhindert, daß ein beliebiger Teilnehmer durch die Vorgabe, befugt zu sein, an geheime Informationen im System gelangen kann. Eine wesentliche Voraussetzung für die Authentifikation ist ein persönliches, nicht kopierbares Merkmal des Teilnehmers. Dieses nicht kopierbare Merkmal des Teilnehmers wird mit Hilfe eines geheimen Schlüssels für die Ver- und Entschlüsselung erreicht, der den beiden Partnern, das heißt einerseits der Chipkarte und andererseits dem System, und zwar nur diesen beiden Partnern bekannt ist. Die Sicherheit kann zusätzlich noch dadurch erhöht werden, daß in der Chipkarte unter Einbeziehung dieses geheimen Schlüssels eine Zufallszahl generiert wird, die von der Chipkarte an das System übertragen wird. Es wäre an sich denkbar, diese Zufallszahlen programmtechnisch zu erzeugen. Nach Ansicht von Sicherheitsexperten sind derart erzeugte Zufallszahlen aber nicht zufällig genug und damit letztlich nicht sicher genug.

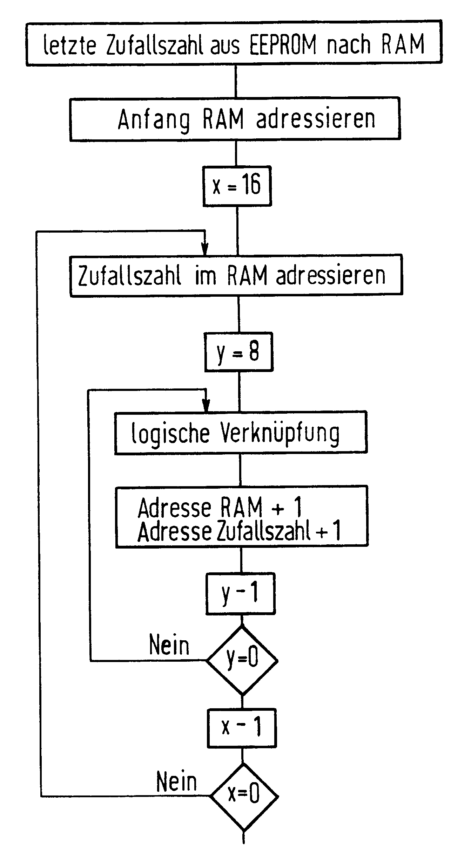

Es ist deshalb bereits bekannt, die "Zufälligkeit" einer Zufallszahl dadurch zu erhöhen, daß man die Generierung der Zufallszahl von einem variablen Startwert abhängig macht oder noch besser, daß man diesen variablen Startwert mit einer bereits vorher generierten Zufallszahl modifiziert (vgl. EP-A-0 281 057, besonders Fig. 5 und zugehörige Beschreibung).

Der vorliegenden Erfindung liegt nun die Aufgabe zugrunde, für die Erzeugung eines modifizierten Startwertes eine möglichst einfache und insbesondere für die Anwendung in Chipkarten gut geeignete Methode anzugeben.

Die Lösung dieser Aufgabe ergibt sich erfindungsgemäß durch die kennzeichnenden Merkmale des Anspruchs 1.

Die Erfindung wird im folgenden anhand eines in der FIG dargestellten Flußdiagramms näher erläutert.

Voraussetzung für das erfindungsgemäße Verfahren ist ein Prozessorchip mit integriertem Zufallszahlengenerator, dessen zuletzt generierte Zufallszahl v in einem Speicher, beispielsweise in einem programmierbaren Festwertspeicher EEPROM zwischengespeichert ist. Diese Zufallszahl v wird nun zunächst aus dem programmierbaren Festwertspeicher EEPROM in einen ebenfalls im Prozessorchip integrierten Arbeitsspeicher RAM übertragen, der z.B. 128 Byte groß ist, aufgeteilt in insgesamt sechzehn, jeweils 8-Byte große Blöcke. Als nächstes wird der Anfang des Arbeitsspeichers RAM adressiert und der erste Block x = 16 bereitgestellt. Mit der Adressierung des ersten Byte der Zufallszahl im Arbeitsspeicher RAM beginnt nun eine zweifache Programmschleife derart, daß jedes Byte der Zufallszahl mit je einem Byte y aus dem 8-Byte breiten Speicherblock logisch verknüpft wird. Wenn das letzte Byte (y = 0) innerhalb eines Blocks abgearbeitet ist, wird der nächste Block adressiert (x - 1) und eine neue Programmschleife innerhalb dieses nächsten Blocks abgearbeitet, solange, bis das letzte Byte (y = 0) des letzten Blocks (x = 0) mit dem letzten Byte der Zufallszahl verknüpft ist. Das Ergebnis dieser Mehrfachverknüpfung ergibt einen neuen Startwert zur Generierung einer neuen Zufallszahl.

## Patentansprüche

1. Verfahren zur Generierung einer Zufallszahl für die verschlüsselte Übertragung von Daten in einem Prozessor-Chipkarten verwendenden Datenaustauschsystem, mit Hilfe eines hinterlegten Geheimschlüssels, eines dem Zufallszahlengenerator zugeordneten Chiffrieralgorithmus und eines variablen Startwertes, der mit einer zuletzt benutzten und zwischengespeicherten Zufallszahl logisch verknüpft wird,
**dadurch gekennzeichnet,** daß jedes Byte der gespeicherten Zufallszahl mit je einem Byte mehrerer, jeweils n-Byte breiter Datenblöcke aus dem Arbeitsspeicher des Prozessors logisch verknüpft wird und daß das Ergebnis dieser Mehrfach-Verknüpfung als Startwert für die Generierung einer neuen Zufallszahl verwendet wird.

2. Verfahren nach Anspruch 1,
**dadurch gekennzeichnet,** daß das jeweils erste Byte der Zufallszahl mit dem jeweils ersten Byte der einzelnen Datenblöcke, das jeweils zweite Byte der Zufallszahl mit dem zweiten Byte der Datenblöcke, usw. verknüpft werden.

## Claims

1. Method for generating a random number for the encoded transmission of data in a data exchange system employing processor chip cards, with the aid of a stored secret cipher, of a ciphering algorithm assigned to the random number generator, and of a variable starting value which is logically combined with a most recently used, temporarily stored random number, characterized in that each byte of the stored random number is logically combined with in each case one byte of a plurality of data blocks that are n bytes wide in each case from the main memory of the processor, and in that the result of said multiple combination is employed as the starting value for generating a new random number.

2. Method according to Claim 1, characterized in that the respective first byte of the random number is combined with the respective first byte of the individual data blocks, the respective second byte of the random number is combined with the second byte of the data blocks, etc.

## Revendications

1. Procédé pour générer un nombre aléatoire, pour la transmission chiffrée de données dans un système d'échange de données utilisant des cartes à puces à microprocesseurs, à l'aide d'un code secret intégré, d'un algorithme de chiffrage associé au générateur du nombre aléatoire et d'une valeur de départ variable qui est en liaison logique avec un nombre aléatoire utilisé en dernier lieu et mémorisé temporairement,
caractérisé en ce que chaque Byte du nombre aléatoire mémorisé est combiné logiquement avec un Byte parmi plusieurs n-Byte de blocs larges de données de la mémoire de travail du processeur, et que le résultat de cette combinaison multiple est utilisé en tant que valeur de départ pour générer un nouveau nombre aléatoire.

2. Procédé suivant la revendication 1,
caractérisé en ce que le premier Byte du nombre aléatoire est en liaison avec le premier Byte de chacun des blocs de données, le deuxième Byte du nombre aléatoire est combiné logiquement avec le deuxième Byte de chacun des blocs de données, etc.
